# EUROPEAN PATENT SPECIFICATION

(11) **EP 2 044 647 B1**
(45) Date of publication and mention of the grant of the patent: **15.01.2014**
(21) Application number: 07719451.2
(22) Date of filing: 29.03.2007
(51) Int. Cl.: H01M 14/00, H01L 51/46, H01M 8/20, H02N 6/00, H01G 9/20, H01M 4/60, H01M 8/18

(54) **REDOX COUPLES, COMPOSITIONS AND USES THEREOF**
REDOX-KOPPELELEMENTE, ZUSAMMENSETZUNGEN UND VERWENDUNGEN DAFÜR
COMPOSITIONS DE COUPLES REDOX ET LEURS UTILISATIONS

(30) Priority: 29.03.2006 CA 2541232
(43) Date of publication of application: 08.04.2009
(73) Proprietor: Dai-Ichi Kogyo Seiyaku Co., Ltd., Kyoto 608-8187 (JP)
(72) Inventor: HAMMAMI, Amer, Ville Mont-royal, Québec H3P 1A2 (CA); MARSAN, Benoît, Sainte-julie, Québec J3E 1R1 (CA); ARMAND, Michel, F-38410 Saint-Martin D'Uriage (FR); HERSANT, Gregory, Montréal, Québec H1X 1T4 (CA)
(74) Representative: Jacob, Reuben Ellis
(86) International application number: PCT/CA2007/000519
(87) International publication number: WO 2007/109907

(56) References cited:
- EP-A1- 0 569 038
- WO-A2-2005/096392
- US-A- 4 833 048
- US-A- 4 833 048
- US-A- 5 370 947
- US-A- 5 882 819
- US-A- 5 882 819
- US-A1- 2005 089 681
- US-A1- 2005 089 681
- PHILIAS J-M ET AL: "All-solid-state photoelectrochemical cell based on a polymer electrolyte containing a new transparent and highly electropositive redox couple", ELECTROCHIMICA ACTA, ELSEVIER SCIENCE PUBLISHERS, BARKING, GB, vol. 44, no. 17, 15 April 1999 (1999-04-15), pages 2915-2926, XP004161254, ISSN: 0013-4686, DOI: 10.1016/S0013-4686(99)00010-9
- RENARD I ET AL: "Ionic properties of non-aqueous liquid and PVDF-based gel electrolytes containing a cesium thiolate/disulfide redox couple", ELECTROCHIMICA ACTA, ELSEVIER SCIENCE PUBLISHERS, BARKING, GB, vol. 48, no. 7, 20 February 2003 (2003-02-20), pages 831-844, XP026600753, ISSN: 0013-4686, DOI: 10.1016/S0013-4686(02)00775-2 [retrieved on 2003-02-20]
- EIICHI SHOUJI ET AL: "Examination of the cleavage and formation of the disulfide bondin poly[dithio-2,5-(1,3,4-thiadiazole)] by redox reaction", JOURNAL OF ELECTROANALYTICAL CHEMISTRY, ELSEVIER, AMSTERDAM, NL, vol. 410, 1 January 1996 (1996-01-01), pages 229-234, XP008129436, ISSN: 1572-6657
- RENARD ET AL.: 'Ionic properties of non-aqueous liquid and PVDF-based gel electrolytes containing a cesium thiolate/disulfide redox couple' ELECTROCHIMICA ACTA vol. 48, no. 7, 2003, pages 831 - 844, XP004405037
- PHILIAS AND MARSAN: 'All-solid-state photoelectrochemical cell based on a polymer electrolyte containing a new transparent and highly electropositive redox couple' ELECTROCHIMICA ACTA vol. 44, no. 17, 1999, pages 2915 - 2926, XP004161254
- SHOUJI AND OYAMA: 'Examination of the cleavage and formation of the disulfide bondin poly[dithio-2,5-(1,3,4-thiadiazole)] by redox reaction' JOURNAL OF ELECTROANALYTICAL CHEMISTRY vol. 410, 1996, pages 229 - 234, XP008129436

## Description

### TECHNICAL FIELD

The present document relates to improvements in the field of electrochemistry. In particular, this document relates to compositions that can be used as redox couples.

### BACKGROUND OF THE INVENTION

Sun is a free and unlimited renewable source of energy. It can be converted directly to electricity by using *p-n* heterojunction solar cells (like silicon-based devices), electrochemical photovoltaic cells (EPC's) or dye-sensitized solar cells (DSSC's). EPC's are systems based on a junction between a semiconductor (*p*-type or *n*-type) and an electrolyte containing one redox couple; an auxiliary electrode completes the device. Owing to the built-in potential developed at the semiconductor/electrolyte interface, the photogenerated electrons and holes are separated and used to undergo oxidation and reduction reactions at the electrodes, respectively with the reduced and oxidized species of the redox couple. On the other hand, DSSC's are systems based on a junction between dye-chemisorbed nanocrystalline TiO₂ particles, deposited on a conductive glass substrate, and a non-aqueous electrolyte containing the I⁻/I₃⁻ redox couple; a platinum-coated conductive glass electrode completes the device. In such systems, the light absorption (by the dye molecules) and charge-carrier transport (in the conduction band of the semiconductor to the charge collector) processes are separated. Homogeneous oxidation of I⁻ species serves to regenerate the photoexcited dye molecules whereas the heterogeneous reduction of I₃⁻ species takes place at the platinum-coated electrode.

There is extensive prior art on EPC's and DSSC's. However, one main issue still to resolve is to find a redox couple that is electrochemically stable, noncorrosive, with a high degree of reversibility and a high electropositive (in conjunction with *n*-type semiconductors) or electronegative (in conjunction with *p*-type semiconductors) potential, and colorless (substantially optically clear) when used in concentrations allowing high electrolyte ionic conductivities.

I⁻/I₃- is the most investigated redox couple for DSSC's. Cations may be alkali metals or organic cations containing quaternary ammonium groups such as dialkylimidazolium (Papageorgiou et al., J. Electrochem.Soc. 143. 3099(1996*)* Stathatos et al., Chem. Mater., 15, 1825 (2003)). The main limitations of this system are (*i*) the fact that it absorbs a significant part of the visible light of the solar spectrum when used in the concentration range giving reasonably good ionic conductivities (which leads to a decrease in the energy conversion efficiency); (*ii*) its low redox potential (which limits the device photovoltage); (*iii*) its reactivity towards metals such as silver copper, etc. (which causes a difficulty about the use of these metals as a current collector); and *(iv)* the high volatility of the electrolyte when usual organic solvents are employed (which causes an irreversible instability of the device).

Nusbaumer et al. in Chem. Eur. J., 9, 3756 (2003) studied alternative redox couples for DSSC's based on much more expensive cobalt complexes. Although the fact that these systems are less colored and possess more positive potential than the I⁻/I₃⁻ redox couple, the oxidized species (Co^{III}) may be reduced at the conductive glass acting as a substrate for the TiO₂ particles, in which case the energy conversion efficiency is decreased. Moreover, regeneration of the dye molecules by the reduced species (Co^{II}) (absolutely necessary to the operation of the device) may become more difficult due to association of the oxidized species (Co^{III}) with the sensitizer. Another serious disadvantage of this Co^{III}/Co^{II} system is the bigger molecular size that causes a limitation of photocurrent under high illumination intensity (100 mW/cm²).

In EPC's, various redox couples dissolved in water were studied, such as Fe(CN)₆⁴⁻/Fe(CN)₆³⁻, I⁻/I₃⁻, Fe²⁺/Fe³⁺, S²⁻/Sₙ²⁻, Se²⁻/Seₙ²⁻ and V²⁺/V³⁺, and devices exhibiting a good energy conversion efficiency were generally unstable under sustained white light illumination due to photocorrosion of the semiconductor electrode. The use of non-aqueous electrolytic media (liquid, gel or polymer) could eliminate the photocorrosion process, but in these cases the number of redox couples is very limited. For examples, the I⁻/I₃⁻ (Skotheim and Inganäs, J. Electrochem. Soc., 132, 2116 (1985)) and S²⁻/Sₙ²⁻ (Vijh and Marsan, Bull. Electrochem., 5, 456 (1989)) redox couples were dissolved in polyethylene oxide (PEO) and modified PEO, respectively, and investigated in EPC's. In addition to the coloration and potential problems occurring with the I⁻/I₃⁻ couple, as mentioned above, the device stability has not been demonstrated. Regarding the S²⁻/Sₙ²⁻ redox couple, the same problems were observed but in this case the stability under white light illumination has been reported.

A cesium thiolate (CsT)/disulfide (T₂) redox couple, where T stands for 5-mercapto-1-methyltetrazolate ion and T₂ for the corresponding disulfide, was dissolved in modified PEO and studied in an EPC (Philias and Marsan, Electrochim. Acta, 44, 2915 (1999)). Its more positive potential than that of the S²⁻/Sₙ²⁻ redox couple, its better dissociation in organic media including polymers (giving much more conductive electrolytes) and its much less intense coloration are responsible for the significant increase of the device energy conversion efficiency. Despite this improvement, the T/T₂ redox couple is quite electrochemically irreversible, with a difference between the anodic (Eₚₐ) and cathodic (E_{pc}) peak potentials, symbolized as ΔEₚ, of 1.70 V at a platinum electrode (scanning speed of 100 mV/s), even when put in a more conductive gel electrolyte comprising 50 mM of T and 5 mM of T₂ dissolved in 80% DMF / DMSO (60/40) and incorporated in 20% poly(vinylidene fluoride), PVdF. Furthermore, its solubility is not very good in organic media.

Thus, based on prior art relative to redox couples for EPC's and DSSC'S, there are no redox couples permitting to maximize the device energy conversion efficiency.

Therefore, new redox couples having improved properties with respect to the redox couples of the prior art would be highly desired. Moreover, redox couples permitting to avoid the drawbacks of the prior art are also highly desired.

### SUMMARY OF THE INVENTION

It is therefore an object to provide a redox couple which would overcome the above-mentioned drawbacks.

It is another object to provide a redox couple which has a good solubility.

It is another object to provide a redox couple which is substantially colorless or substantially optically clear at concentrations permitting a good conductivity.

It is another object to provide a redox couple which has a low vapor pressure.

It is another object to provide a redox couple which has a high thermal stability.

It is another object to provide a redox couple which is highly electropositive as example for application in DSSC'S or EPC's using n-type semiconductors.

It is another object to provide a redox couple which is highly electronegative as example for application in EPC's using *p*-type semiconductors.

It is another object to provide a redox couple which will not corrode other components when used in a device.

It is another object to provide a redox couple which has a small ΔEₚ.

It is another object to provide a redox couple which has a high degree of reversibility.

In accordance with one aspect, there is provided a composition according to claim 1. Further compounds, which are partly not according to the invention, are a first compound chosen from compounds of formulas (I) and (III) and a second compound chosen from compounds of formulas (II) and (IV):

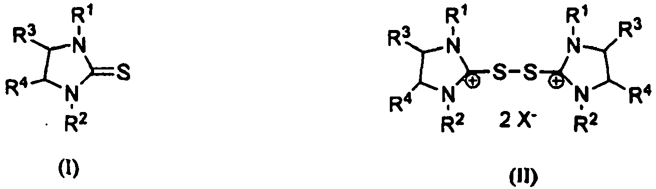

A-S⁻ M⁺ (III)

A-S-S-A (IV)

wherein
R¹ and R² are the same or different and are chosen from a hydrogen atom, C₁-C₃₀ alkyl which is linear or branched and optionally halogenated, C₃-C₁₂ cycloalkyl, C₁-C₁₂ heterocyclyl, C₂-C₈ alkenyl, C₂-C₈ alkynyl, C₆-C₁₂ aryl, C₆-C₃₀ aralkyl, C₆-C₃₀ alkylaryl, and C₁-C₁₂ heteroaryl, C₆-C₃₀ alkylheteroaryl, and C₆-C₃₀ alkylheterocyclyl, or R¹ and/or R² is part of a polymer chain or network
R³ and R⁴ are the same or different and are chosen from a hydrogen atom, C₁-C₃₀ alkyl which is linear or branched and optionally halogenated, C₃-C₁₂ cycloalkyl, C₁-C₁₂ heterocyclyl, C₂-C₈ alkenyl, C₂-C₈ alkynyl, C₆-C₁₂ aryl, C₆-C₃₀ aralkyl, C₆-C₃₀ alkylaryl, and C₁-C₁₂ heteroaryl, C₆-C₃₀ alkylheteroaryl, and C₆-C₃₀ alkylheterocyclyl, F, Cl, Br, I, CF₃, CN, SO₃H, CₙF₂ₙ₊₁, HCₙF₂ₙ₊₁-, CF₃O-, CₙF₂ₙ₊₁O-, HCₙF₂ₙ₊₁O-, CF₃S-, CₙF₂ₙ₊₁S-, HCₙF₂ₙ₊₁S-. ClCₙF₂ₙ₊₁-, ClCₙF₂ₙ₊₁O-, ClCₙF₂ₙ₊₁S-, BrCₙF₂ₙ₊₁-, BrCₙF₂ₙ₊₁O-, BrCₙF₂ₙ₊₁S-, ICₙF₂ₙ₊₁-, ICₙF₂ₙ₊₁O-, ICₙF₂ₙ₊₁S-, CH₂=CHCₙF₂ₙ₊₁-, CH₂=CHCₙF₂ₙ₊₁O-, CH₂=CHCₙF₂ₙ₊₁S-, R²OCₙF₂ₙ₊₁-, R²OCₙF₂ₙ₊₁O-, R²OCₙF₂ₙ₊₁S-, CF₃CH₂-, CF₃CH₂O-, (CF₃)₂CH-, (CF₃)₂CHO-, CHF₂-, CHF₂O-, CHF₂S-, CClF₂-, CClF₂O-, CClF₂S-, CCl₂F-, CCl₂FO-, CClF₂S-, CCl₃-, CCl₃O-, C₆F₅-, CF₃C₆F₄-. C₆F₅O-, CF₃C₆F₄O-, 3,5-(CF₃)₂C₆H₂-, C₆Cl₅⁻, C₆Cl₅O-, FSO₂CF₂-, ClSO₂(CF₂)ₙ-, ⁻SO₃(CF₂)ₙ-,⁻CO₂(CF₂)ₙ-, FSO₂N⁽⁻⁾SO₂(CF₂)ₙ-, CF₃SO₂N⁽⁻⁾SO₂(CF₂)ₙ-, CₙF₂ₙ₊₁SO₂N⁽⁻⁾SO₂(CF₂)ₙ-, R²SO₂N⁽⁻⁾SO₂(CF₂)ₙ-, FSO₂(CF₂)ₙ-, ClSO₂(CF₂)ₙ-, CₙF₂ₙ₊₁SO₂N⁽⁻⁾(CF₂)ₙ-, and R²SO₂N⁽⁻⁾(CF₂)ₙ-
or R³ and/or R⁴ is part of a polymer chain or network, or absent
X⁻ is (FSO₂)₂N⁻, (CF₃SO₂)₂N⁻, (C₂F₅SO₂)₂N⁻, (CF₃SO₂)₃C⁻, CF₃SO₃⁻, CF₃COO⁻, AsF₆⁻, CH₃COO⁻, (CN)₂N⁻, (CN)₃C⁻ NO₃⁻, 2.3HF, Cl⁻, Br⁻, I⁻, PF₆⁻, BF₄⁻, ClO₄, SCN⁻;
M is H, an organic cation or an inorganic cation;
A is a C₁-C₁₂ heteroaryl, a C₁-C₁₂ heterocyclyl, C₆-C₁₂ aryl, C₆-C₃₀ aralkyl, or C₆-C₃₀ alkylaryl
wherein the alkyl, cycloalkyl, heterocyclyl, alkenyl, alkynyl, aryl, aralkyl, alkylaryl, heteroaryl, alkylheteroaryl, and alkylheterocyclyl optionally includes a heteroatom in the form of -O-, =N-, -S-, =P-, =(P=O)-, -SO-, - SO₂-;
wherein the alkyl, cycloalkyl, heterocyclyl, alkenyl, alkynyl, aryl, aralkyl, alkylaryl, heteroaryl, alkylheteroaryl, and alkylheterocyclyl being unsubstituted or substituted with 1 to 3 substituents chosen from R³, R⁴, F, Cl, Br, I, OH, a C₁-C₆ alkoxy, a C₁-C₆ hydroxy alkyl, NO₂, CN, CF₃, SO₃H, CₙF₂ₙ₊₁, C₁-C₁₂ alkyl which is linear or branched, C₆-C₁₂ aryl, CₙH₂ₙ₊₁, Ph₂P(O)-, Ph₂P-, Me₂P(O)-, Me₂P, Ph₂P(S), Me₂P(S), Ph₃P=N-, Me₃P=N-, C₆H₅CₚH₂ₚ-, CₚH₂ₚ₊₁C₆H₄-, CₚH₂ₚ₊₁C₆H₄CₙH₂ₙ-, CH₂=CHCₚH₂ₚ-, CH₂=CHC₆H₅-, CH₂=CHC₆H₄CₚH₂ₚ₊₁-, and CH₂=CHCₚH₂ₚC₆H₄-;
n is an integer having a value from 1 to 48;
m is an integer having a value from 2 to 12; and
p is an integer having a value from 1 to 48.

It was found that such compositions are quite useful as redox couples.

In accordance with another aspect, there is provided a redox couple according to scheme 1 or scheme 2: 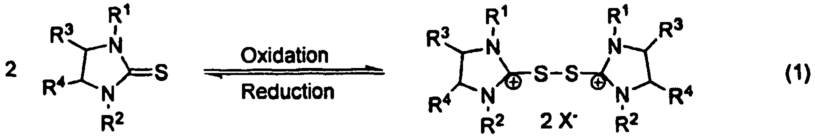 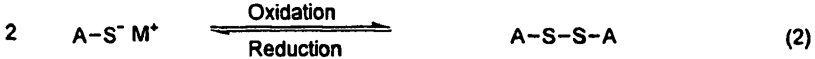 wherein R¹, R², R³, R⁴, X', M and A are as previously defined.

It was found that the redox couples previously presented can have a very good degree of reversibility since they can have a relatively small ΔEₚ. Moreover, it has been found that these redox couples have a high thermal stability, and a good solubility in various solvents. It also has been found that these redox couples are substantially colorless (or substantially optically clear) at concentrations permitting a good conductivity. Such characteristics make them particularly interesting in various applications like solar cells or photovoltaic cells. It also has been found that these redox couples do not have tendency to corrode other components when used in devices such as solar cells or photovoltaic cells.

The expression "redox couple" as used herein refers to a couple comprising an oxidized member and a reduced member.

The term "aryl" as used herein refers to a cyclic or polycyclic aromatic ring. According to one example, the aryl group can be phenyl or naphthyl.

The term "heteroaryl" as used herein refers to an aromatic cyclic or fused polycyclic ring system having at least one heteroatom chosen from N, O, and S. Examples include heteroaryl groups such as furyl, thienyl, pyridyl, quinolinyl, isoquinolinyl, indolyl, isoindolyl, triazolyl, pyrrolyl, tetrazolyl, imidazolyl, pyrazolyl, oxazolyl, thiazolyl, benzofuranyl, benzothiophenyl, carbazolyl, benzoxazolyl, pyrimidinyl, benzimidazolyl, quinoxalinyl, benzothiazolyl, naphthyridinyl, isoxazolyl, isothiazolyl, purinyl, quinazolinyl, and so on.

The term "heterocyclyl" includes non-aromatic rings or ring systems that contain at least one ring having at least one hetero atom (such as nitrogen, oxygen or sulfur). For example, such a term can include all of the fully saturated and partially unsaturated derivatives of the above mentioned heteroaryl groups. Examples of heterocyclic groups include pyrrolidinyl, tetrahydrofuranyl, morpholinyl, thiomorpholinyl, piperidinyl, piperazinyl, thiazolidinyl, isothiazolidinyl, and imidazolidinyl.

In the compositions and redox couples previously presented, A can be of formula 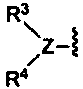 wherein Z is chosen from 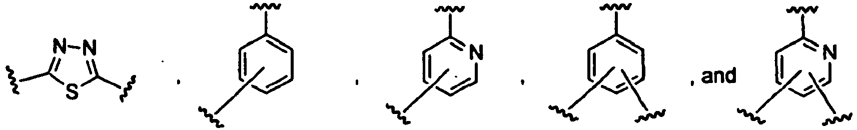 wherein R₃ and R₄ are as previously defined.

A can also be chosen from thiadiazoles, pyridines, and phenylenes. The thiadiazoles, pyridines, and phenylenes can be unsubstituted or substituted with with 1 to 3 substituents chosen from F, Cl, Br, I, OH, a C₁-C₆alkoxy, a C₁-C₆ hydroxy alkyl, NO₂, CN, CF₃, SO₃-, CₙF₂ₙ₊₁, C₁-C₁₂ alkyl which is linear or branched, C₆-C₁₂ aryl, CₙH₂ₙ₊₁. Ph₂P(O)-, Ph₂P-, Me₂P(O)-, Me₂P, Ph₂P(S), Me₂P(S), Ph₃P=N-, Me₃P=N-, C₆H₅CₚH₂ₚ-, CₚH₂ₚ₊₁C₆H₄-, CₚH₂ₚ₊₁C₆H₄CₙH₂ₙ-CH₂=CHCₚH₂ₚ-, CH₂=CHC₆H₅-, CH₂=CHC₆H₄CₚH₂ₚ₊₁-, and CH₂=CHCₚH₂ₚC₆H₄-.

A can also be chosen from

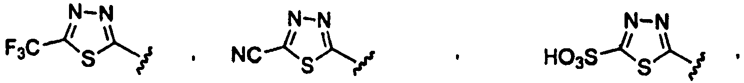

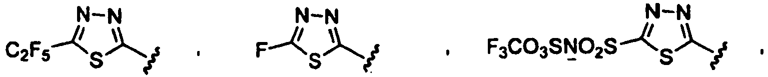

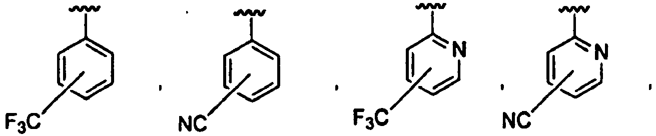

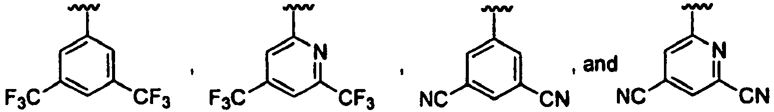

In the compositions and redox couples, X⁻ can be (CF₃SO₂)₂N⁻, (C₂F₅SO₂)₂N⁻, (CF₃SO₂)₃C⁻, CF₃SO₃⁻, (CN)₂N⁻, PF₆⁻, BF₄⁻ or ClO₄⁻. For example, X⁻ is (CF₃SO₂)₂N⁻.

M can be chosen from a positively charged C₁-C₁₂ heteroaryl or a C₁-C₁₂ heterocyclyl, wherein said heteroaryl or said heterocyclyl is unsubstituted or substituted with 1 to 3 substituents chosen from F, Cl, Br, I, OH, a C₁-C₆ alkoxy, a C₁-C₆ hydroxy alkyl, NO₂, CN, CF₃, SO₃-, CₙF₂ₙ₊₁, C₁-C₁₂ alkyl which is linear or branched, C₆-C₁₂ aryl, CₙH₂ₙ₊₁, Ph₂P(O)-, Ph₂P-, Me₂P(O)-, Me₂P, Ph₂P(S), Me₂P(S), Ph₃P=N-, Me₃P=N-, C₆H₅CₚH₂ₚ-, CₚH₂ₚ₊₁C₆H₄-, CpH₂ₚ₊₁C₆H₄CₙH₂ₙ-, CH₂=CHCₚH₂ₚ-, CH₂=CHC₆H₅-, CH₂=CHC₆H₄CₚH₂ₚ₊₁-, and CH₂=CHCₚH₂ₚC₆H₄-.

M can also be an inorganic cation such as Li⁺, K⁺, Na⁺, and Cs⁺. M can also be an organic cation of formula 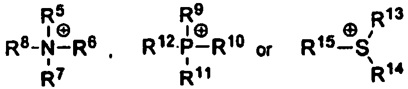 wherein
R⁵, R⁶, R⁷ and R⁸ are same or different and each independently represent a C₁-C₂₀ alkyl which is linear or branched, C₃-C₁₂ cycloalkyl, C₁-C₁₂ heterocyclyl, C₂-C₂₀ alkenyl, C₂-C₂₀ alkynyl, C₆-C₁₂ aryl, C₆-C₂₀ aralkyl, C₆-C₂₀ alkylaryl, and C₁-C₁₂ heteroaryl;
R⁹, R¹⁰, R¹¹ and R¹² are same or different and each independently represent a C₁-C₂₀ alkyl which is linear or branched, C₃-C₁₂ cycloalkyl, C₁-C₁₂ heterocyclyl, C₂-C₂₀ alkenyl, C₂-C₂₀ alkynyl, C₆-C₁₂ aryl, C₆-C₂₀ aralkyl, C₆-C₂₀ alkylaryl, and C₁-C₁₂ heteroaryl; and
R¹³, R¹⁴ and R¹⁵ are same or different and each independently represent a C₁-C₂₀ alkyl which is linear or branched, C₃-C₁₂ cycloalkyl, C₁-C₁₂ heterocyclyl, C₂-C₂₀ alkenyl, C₂-C₂₀ alkynyl, C₆-C₁₂ aryl, C₆-C₂₀ aralkyl, C₆-C₂₀ alkylaryl, and C₁-C₁₂ heteroaryl,
wherein the alkyl, cycloalkyl, heterocyclyl, alkenyl, alkynyl, aryl, aralkyl, alkylaryl, heteroaryl, alkylheteroaryl, and alkylheterocyclyl being unsubstituted or substituted with 1 to 3 substituents chosen from F, Cl, Br, I, OH, a C₁-C₆ alkoxy, a C₁-C₆ hydroxy alkyl, NO₂, CN, CF₃, SO₃-, CₙF₂ₙ₊₁, C₁-C₁₂ alkyl which is linear or branched, C₆-C₁₂ aryl, CₙH₂ₙ₊₁, C₆H₅CₚH₂ₚ-, CₚH₂ₚ₊₁C₆H₄-, CₚH₂ₚ₊₁C₆H₄CₙH₂ₙ-, CH₂=CHCₚH₂ₚ-, CH₂=CHC₆H₅-, CH₂=CHC₆H₄CₚH₂ₚ₊₁-, and CH₂=CHCₚH₂ₚC₆H₄-.

M can also be chosen from N-substituted imidazoliums. The substituents can each independently be a C₁-C₁₂ alkyl or a C₁-C₆ alkyl which is linear (for example 1,3-methylethylimidazolium) or branched or tetralkylammoniums, wherein each of the alkyl groups is independently C₁-C₁₂ alkyl which is linear or branched (for example tetrabutylammonium).

The compositions can further comprise a solvent chosen from nitriles (such as CH₃CN), CH₂Cl₂, alcohols (such as ethanol, isopropanol), DMSO, amides (such as DMF), hexane, heptane, toluene, linear carbonates (such as dimethylcarbonate, diethylcarbonate, ethylmethylcarbonate), cyclic esters (such as ethylene carbonate, propylene carbonate), urea (tetramethylurea), ionic liquids such as dialkylimidazolium, trialkylsulfonium, and quaternary amine (such as C₁-C₂₀ tetraalkylammonium) and quaternary phosphonium (such as C₁-C₂₀ tetraalkylphosphonium or C₆-C₁₂ tetraarylphosphonium) salts associated with stable anion such as (FSO₂)₂N⁻, (CF₃SO₂)₂N⁻, (C₂F₅SO₂)₂N⁻, (CF₃SO₂)₃C⁻, CF₃SO₃⁻, CF₃COO⁻, AsF₆⁻, CH₃COO⁻, (CN)₂N⁻,(CN)₃C⁻, NO₃⁻, 2.3HF, Cl⁻, Br⁻, I⁻, PF₆⁻, BF₄⁻, ClO₄⁻, SCN⁻, and mixtures thereof. For example, the solvent is nitriles (such as CH₃CN), amides (such as DMF), linear carbonates (such as dimethylcarbonate, diethylcarbonate, ethylmethylcarbonate), cyclic esters (such as ethylene carbonate, propylene carbonate), ionic liquids such as dialkylimidazolium, trialkylsulfonium, and quaternary amine (such as C₁-C₂₀ tetraalkylammonium) and quaternary phosphonium (such as C₁-C₂₀ tetraalkylphosphonium or C₆-C₁₂ tetraarylphosphonium) salts associated with stable anion such as (FSO₂)₂N⁻, (CF₃SO₂)₂N⁻, (C₂F₅SO₂)₂N⁻, (CF₃SO₂)₃C⁻, CF₃SO₃⁻, CF₃COO⁻, AsF₆⁻, CH₃COO⁻, (CN)₂N⁻,(CN)₃C⁻, NO₃⁻, 2.3HF, Cl⁻, Br⁻, I⁻, PF₆⁻, BF₄⁻, ClO₄⁻, SCN⁻ and mixtures thereof.

In the compositions, the first compound can be, for example, present in the composition in a molar ratio of about 0.1 to about 99.9 % and the second compound can be present in a molar ratio of about 99.9 to about 0.1 %. According to another example, the first compound can be present in the composition in a molar ratio of about 5.0 to about 95.0 % and the second compound is present in a molar ratio of about 95.0 to about 5.0 %.

The compositions can be in the form of an uncolored and / or translucid solution. The compositions can also be substantially optically clear.

The compositions can comprise a compound of formula (I) and a compound of formula (II) or they can comprise a compound of formula (III) and a compound of formula (IV).

In accordance with another aspect, there is provided a photovoltaic cell comprising an anode, a cathode, and a composition as previously defined in the present document.

In accordance with another aspect, there is provided a photovoltaic cell comprising an anode, a cathode, a composition as defined in the present document, and a solvent, a polymer, a molten salt, an ionic liquid, a gel or any combination thereof.

In accordance with another aspect, there is provided a photovoltaic cell comprising an anode, a cathode, and a redox couple as defined in the present document.

In accordance with another aspect, there is provided a photovoltaic cell comprising an anode, a cathode, a redox couple as defined in the present document, and a solvent, a polymer, a molten salt, an ionic liquid, a gel or any combination thereof.

The redox couples of the present document can be used in a solar cell, a fuel cell, a battery, a sensor or a display.

### BRIEF DESCRIPTION OF FIGURES

Further features and advantages will become more readily apparent from the following description of specific embodiments as illustrated by way of examples in the appended figures wherein:
Fig. 1 shows a cyclic voltammogram of a composition according to one embodiment, wherein the oxidized member (compound 5) and the reduced member (compound 3) of the composition are present at the beginning of the experiment in a 1:1 ratio.
Fig. 2 shows another cyclic voltammogram of the composition tested in the voltammogram of Fig. 1, wherein the ratio reduced member (compound 3) / oxidized member (compound 5) is about 2 : 1 at the beginning of the experiment;
Fig. 3 shows another cyclic voltammogram of the composition tested in the voltammogram of Fig. 1, wherein the ratio reduced member (compound 3) / oxidized member (compound 5) is about 1 : 2 at the beginning of the experiment;
Fig. 4 shows cyclic voltammograms comparing the composition at various proportions of the reduced and oxidized members, which are the proportions analyzed in Figs. 1 to 3;
Fig. 5 shows other cyclic voltammograms comparing two different working electrodes with the composition used in the same proportion as in the voltammogram of Fig. 3;
Fig. 6 (not according to the invention) shows a cyclic voltammogram of a composition according to another embodiment, wherein the ratio reduced member (compound 7) / oxidized member (compound 8) is about 3 : 1 at the beginning of the experiment;
Fig. 7 (not according to the invention) shows a cyclic voltammogram of a composition according to another embodiment, wherein the ratio reduced member (compound 9) / oxidized member (compound 10) is about 3 : 1 at the beginning of the experiment;
Fig. 8 shows a cyclic voltammogram of a composition according to another embodiment, wherein the ratio reduced member (compound 11) / oxidized member (compound 12) is about 2 : 1 art the beginning of the experiment;
Fig. 9 shows a cyclic voltammogram of a composition according to another embodiment, wherein the ratio reduced member (compound **13)** / oxidized member (compound **14)** is about 1 : 3 at the beginning of the experiment;
Fig. 10 shows a cyclic voltammogram of a composition according to another embodiment, wherein the ratio reduced member (compound **17)** / oxidized member (compound **18)** is about 5 : 1 at the beginning of the experiment;
Fig. 11 (not according to the invention) is a comparison between the visible spectrum of a solution comprising compounds **17** and **18** in ethyl-1-methyl-3-imidazolium-bis-fluoro-sulfonylimide (EMITFSI) and the visible spectrum of EMI⁺I⁻ / I₂ in EMITFSI; and
Fig. 12 (not according to the invention) shows cyclic voltammograms of the solution comprising compounds **17** and **18** in EMITFSI, wherein stability tests at a temperature of 70 ° C have been carried out.

### DETAILED DESCRIPTION OF VARIOUS EMBODIMENTS

The following examples are given in a non-limitative manner.

For example, the compositions and redox couples of the present document can be made by the following general procedure.

### Synthesis of compound 3 (1,3-diethyl-imidazolidine-2-thione)

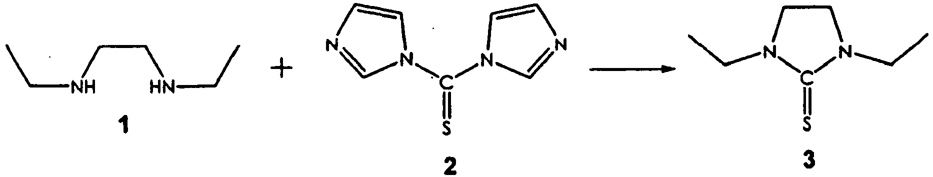

In a 100 mL two-neck flask 30 mL of tetrahydrofuran (THF), 1.6 mL (11.2 mmol; 1 eq) of 1 were introduced. Then, 2 g (11.1 mmol; 1 eq) of **2** were added. The resulting solution was stirred for 12 hours. The reaction was performed in a glove box. The reaction mixture was then concentrated with a rotative evaporator and an orange paste is obtained. Thereafter, approximately 30 mL of Et₂O were added to it. 3 then precipitated and the impurities were solubilized in Et₂O. A filtration on paper was carried out and **3** was thus recovered. **3** was concentrated using a rotative evaporator. Again, an orange paste was obtained and approximately 30 mL of Et₂O were added to this mixture. **3** precipitated. This step was repeated until no more precipitate was obtained when Et₂O is added.

### Synthesis of compound 5 (1,3-diethyl-imidazolidine-2-thione disulfide)

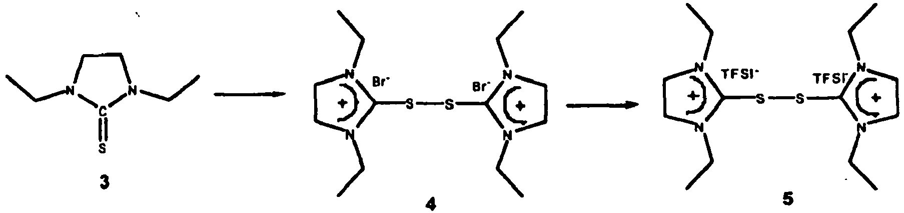

In a 125 mL reactional flask, 1 g (6.32 mmol; 1 eq) of compound 3 was introduced with 30 mL of water. 0.2 mL of Br₂ (0,50 g: 3.16 mmol; ½ eq) were then added dropwise. It is also possible to add an excess of Br₂. The solution was stirred for 1 hour at room temperature. In a separate 50 mL two-neck flask filled with 20 mL of water, 1.81g (6.32 mmol: 1 eq) of lithium bis(trifluoromethanesulfonyl)imide (LiTPSI) were dissolved. This mixture was then added to the previous one. A yellowish oil (5) was formed. Compound **5** was extracted with 50 mL of Et₂O. The organic layer was separated and dried with anhydrous MgSO₄. The organic layer was then concentrated using a rotative evaporator. A yellowish oil 5 was obtained.

### Synthesis of compound 6 (potassium salt of 5-methyl-2-mercapto-1,3,4-thiadiazole) (not according to the invention)

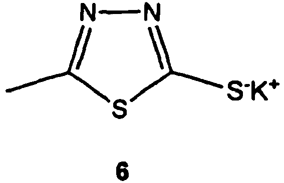

Commercially available 5-methyl-2-mercapto-1,3,4-thiadiazole from ALDRICH™ (1 eq) was neutralized with potassium carbonate K₂CO₃ (0.5 eq) in methanol (concentrations : 0.5 M). The resulting solution was stirred in an ultrasonic bath until complete dissolution of K₂CO₃ (almost 2 h 30 min). The mixture was then filtrated with a Büchner funnel fitted with a filter Whatman no. 40 ("Ashless"). The filtrate was concentrated with a rotative evaporator and a slightly yellow solid was obtained and dried under high vacuum in a desiccator for 12 h. At last, the slightly yellow solid **6** was rinsed with CH₂Cl₂ and dried under vacuum (yield ≈ 70 %). Compound **6** (C₃H₃KN₂S₂) has a molecular weight of 170.29 g/mol.

### Synthesis of compound 7 (tetrabutylammonium (TBA) salt of the 5-methyl-2-mercapto-1,3,4-thiadiazole) (not according to the invention)

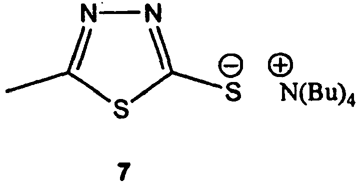

In a first reaction flask, acetone and compound **6** (1 eq) were introduced (concentration : 1 M). In a second reaction flask acetone and commercially available tetrabutylammonium perchlorate from ALFA AESAR™ were introduced (concentration : 1 M). After complete dissolution of the compounds in each flask, the solution of tetrabutylammonium perchlorate was added to the solution of **7.** The resulting mixture was stirred in an ultrasonic bath for 1 hour and a white solid (KClO₄) starts to precipitate. Then, the mixture was introduced in a freezer for one night in order to complete the crystallisation of KClO₄. After filtration of the reaction medium with a Büchner funnel fitted with a filter paper Whatman no. 40 (Ashless), the filtrate was concentrated with a rotative evaporator and a slightly yellow solid **7** was obtained, then dried under high vacuum in a desiccator for 12 hours. The yield was quantitative. Compound **7,** C₁₉H₃₉N₃S₂ has a molecular weight of 373.66 g/mol.

### Synthesis of compound 8 (not according to the invention)

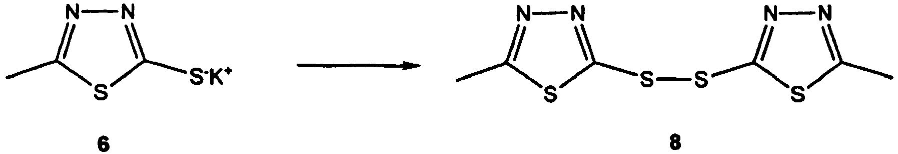

Compound **6** (200 mg ; 0.89 mmol, 1 eq) was charged into 50 mL flask filled with 20 mL H₂O. After complete dissolution, I₂ (50.3 mg ; 0.44 mmol ; 0.5 eq) was added to the solution. Immediately a white suspension appeared. The solution was stirred until I₂ was completely dissolved, then the white solid was filtrated under vacuum with a Büchner funnel fitted with a Whatman filter (no. 40 : Ashless). The solid was washed with H₂O (100 mL) and dried under vacuum for 24 h to give 97.34 mg (yield of 30 %) of product **8.**

### Synthesis of compound 9 (potassium salt of 2-mercapto-1,3,4-thiadiazole) (not according to the invention)

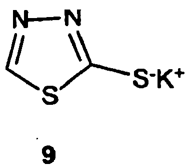

2-mercapto-1,3,4-thiadiazole (1.18 g, 10 mM, 1 eq) was neutralized with potassium carbonate K₂CO₃ (0.5 eq) in methanol (concentrations : 0.5 M). The resulting solution was stirred in an ultrasonic bath until complete dissolution of K₂CO₃ (almost 2 h 30 min). The mixture was then filtrated with a Büchner funnel fitted with a filter, Whatman no. 40 ("Ashless"). The filtrate was concentrated with a rotative evaporator and a slightly yellow solid was obtained and dried for 12 h at 60 °C. At last, the slightly yellow solid 6 was washed with 50 mL CH₂Cl₂ and dried under vacuum over night at 60°C (yield ≈ 80 %).

### Synthesis of compound 10 (not according to the invention)

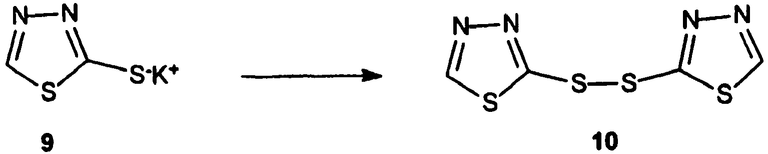

Compound **9** (500 mg ; 0.32 mmol, 1 eq) was charged into 50 mL flask filled with 20 mL distilled H₂O. After complete dissolution, I₂ (56.3 mg ; 0.44 mmol ; 0.5 eq) was added to the solution. Immediately, a white suspension appeared. The solution was stirred until I₂ was completely dissolved, then the white precipitate was filtrated under vacuum with a Büchner funnel fitted with a Whatman filter (no. 40 : Ashless). The solid was washed with H₂O (100 mL) and dried under vacuum for 24 h at 60°C to give 29.9 mg (yield of 40 %) of product **10.**

### Synthesis of compound 11 (4-Methyl-5-trifluoromethyl-4H-1,2,4-triazolin-3(2H)-thione potassium salt)

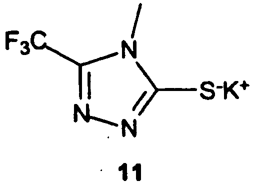

4-Methyl-5-trifluoromethyl-4H-1,2,4-triazolin-3(2H)-thione (1.82 g, 10 mM, 1 eq) was neutralized with potassium carbonate K₂CO₃ (0.5 eq) in methanol (concentration : 0.5 M). The resulting solution was stirred in an ultrasonic bath until complete dissolution of K₂CO₃ (almost 2 h 30 min). The mixture was then filtrated with a Büchner funnel fitted with a filter Whatman no. 40 ("Ashless"). The filtrate was concentrated with a rotative evaporator and a white solid was obtained and dried under vacuum for 12 h at 60°C. The white solid **11** was rinsed with 100 mL CH₂Cl₂ and dried under vacuum (yield ≈ 75 %). Compound **11** (C₄H₃F₃KN₃S) has a molecular weight of 220.96 g/mol.

### Synthesis of compound 12

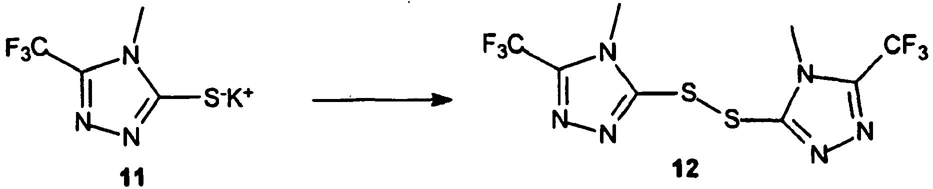

Compound **11** (500 mg ; 0.23 mmol, 1 eq) was charged into 50 mL flask filled with 20 mL distilled H₂O. After complete dissolution, I₂ (14.1 mg ; 0.12 mmol ; 0.5 eq) was added to the solution. Immediately, a white suspension appeared. The solution was stirred until I₂ was completely dissolved, then the white solid was filtrated out under vacuum with a Büchner funnel fitted with a Whatman filter (no. 40 : Ashless). The solid was washed with H₂O (100 mL) and dried under vacuum for 24 h at 60°C to give 25.1 mg (yield of 30 %) of compound **12.**

### Synthesis of compound 14

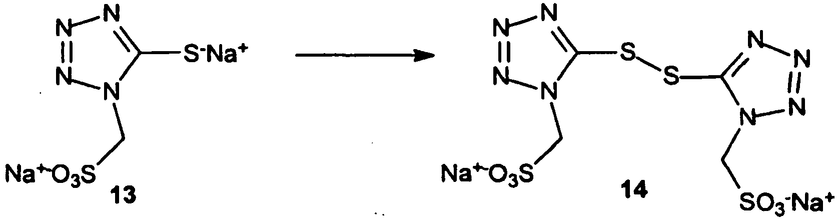

5-Mercapto-1*H*-tetrazole-1-methanesulfonic acid disodium salt **13** (500 mg ; 0.21 mM, 1 eq) was charged into 50 mL flask filled with 30 mL DMSO. The well-stirred mixture was heated at 65°C for 2 hours and then concentrated. The white solid was washed with acetone (100 mL), purified by recrystallization in a mixture of methanol and ethanol, and then, dried under vacuum for 24 h at 60°C to give 73.9 mg (yield of 80 %) of compound **14.**

### Synthesis of compound 17 (not according to the invention)

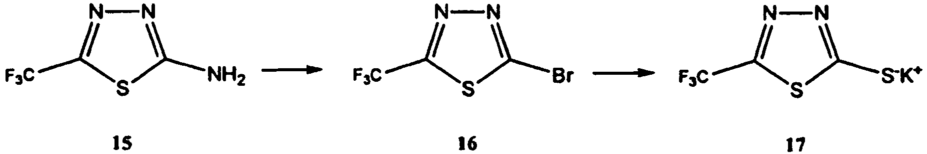

Compound **15** (10.0026 g ; 59.1 mmol ; 1 eq) was introduced in a 250 mL reaction flask. This flask was put in an ice bath and a solution of HBr (48 % in H₂O; 46.0 mL) as well as water (12.0 mL) were added. After the complete dissolution (5 min) of compound **15,** a solution of NaNO₂ (8.3214 g ; 120.0 mmol ; 2 eq) in H₂O (16 mL) was added dropwise over a period of 45 minutes (gas emission and brown coloration were observed). The resulting solution was stirred for 2 hours at room temperature. Then, the reaction mixture was extracted twice with 40 mL of Et₂O. The organic layers were separated, washed with a portion of 60 mL of water and dried over anhydrous MgSO₄. After concentration of the solution with a rotative evaporator, a brown oil (compound **16)** was obtained.

Compound **16** was then added dropwise over a period of 40 minutes to a 150 mL reaction flask containing Li₂S (8.1432 g ; 177.3 mmol). The reaction mixture was stirred for 2 h and then concentrated. The residue was cooled to - 20°C and a solution of HCl (3 M ; 50 mL) was added dropwise over a period of 20 minutes in order to destroy the excess of Li₂S. The crude product was then extracted twice with 40 mL of Et₂O. The organic layers were washed with portions of 80 mL of saturated solutions of Na₂S₂O₃ and NaCl, H₂O and dried over anhydrous MgSO₄. After concentration with a rotative evaporator, a solid was obtained. The sublimation of this solid under vaccum (heat temperature of 70°C) allowed to provide translucent crystals.

The crystalline product (7.0531 g ; 37.9 mmol ; 1 eq) was then neutralized with potassium carbonate K₂CO₃ (2.6597 g ; 19.3 mmol ; 0.5 eq) in methanol (40 mL). The resulting solution was stirred for 2 hours and 30 minutes and filtrated. The filtrate was concentrated with a rotative evaporator and dried under vaccum in a dessicator for 12 h. A white solid (compound 17) (4.7214 g yield of 55.7 % for this step and 35.7 % for the entire procedure) was obtained.

### Synthesis of compound 18 (not according to the invention)

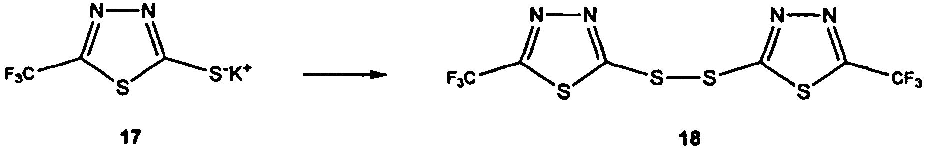

Compound **17** (200 mg ; 0.89 mmol, 1 eq) was introduced in a 50 mL reaction flask filled with H₂O (20 mL) so as to obtain a solution. I₂ (50.3 mg ; 0.44 mmole ; 0.5 eq) was added to this solution. Immediately after the addition of iodine, a white solid in suspension was appeared. The solution was stirred until I₂ was dissolved and the white solid was filtrated under vaccum with a Büchner funnel fitted with a Whatman™ filter (no. 40 : Ashless). The solid was rinsed with H₂O (100 mL) and dried under vaccum in a dessicator for 24 h to give 292.3 mg (yield of 90 %) of product **18.**

Some experiments have been made with the redox couple **3**/**5,** which is as follows:

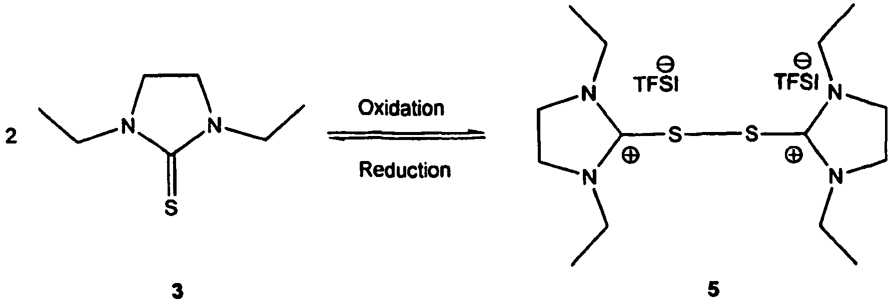

Various cyclic voltammetry experiments were carried out using the redox couple **3**/**5.**

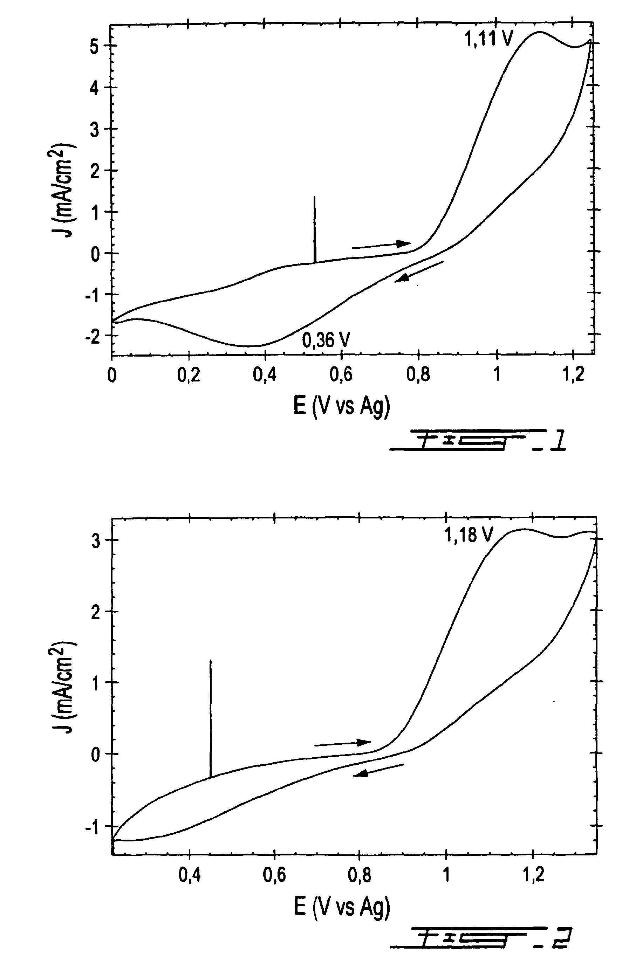

In Fig. 1, there is shown a cyclic voltammogram of a solution comprising compound **3** (1,3-diethyl-imidazolidine-2-thione) (0.25 M) and compound **5** (disulfide form) (0.25 M) in EMITFSI at 22 °C. A platinum electrode (A= 0.0249 cm²) was used as working electrode and referenced to an Ag wire. Scan rate was 100 mV/s.

In Fig. 2, there is shown a cyclic voltammogram of a solution comprising compound **3** (1,3-diethyl-imidazolidine-2-thione) (0.25 M) and compound **5** (disulfide form) (0.13 M) in EMITFSI at 22 ° C. A platinum electrode (A= 0.0249 cm²) was used as working electrode and referenced to an Ag wire. Scan rate was 100 mV/s.

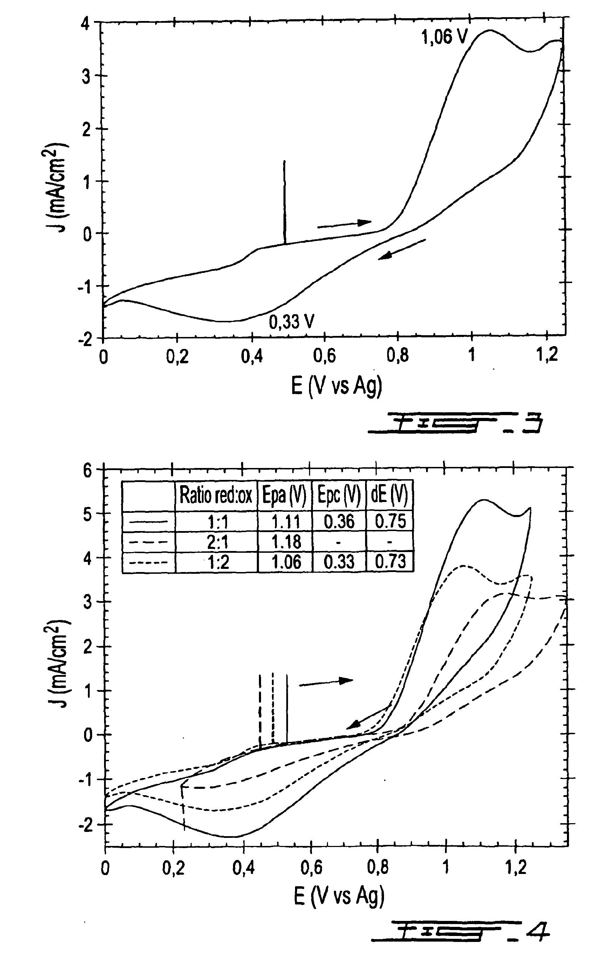

In Fig. 3, there is shown a cyclic voltammogram of a solution comprising compound 3 (1,3-diethyl-imidazolidine-2-thione) (0.13 M) and compound 5 (disulfide form) (0.25 M) in EMITFSI at 22 ° C. A platinum electrode (A= 0.0249 cm²) was used as working electrode and referenced to an Ag wire. Scan rate was 100 mV/s.

In Fig. 4, there is shown cyclic voltammograms of three solutions comprising compounds 3 and 5 at different ratios (compound 3 : compound 5) (1:1; 2:1; 1:2), in EMITFSI at 22 °C. A platinum electrode (A= 0.0249 cm²) was used as working electrode and referenced to an Ag wire. Scan rate was 100 mV/s.

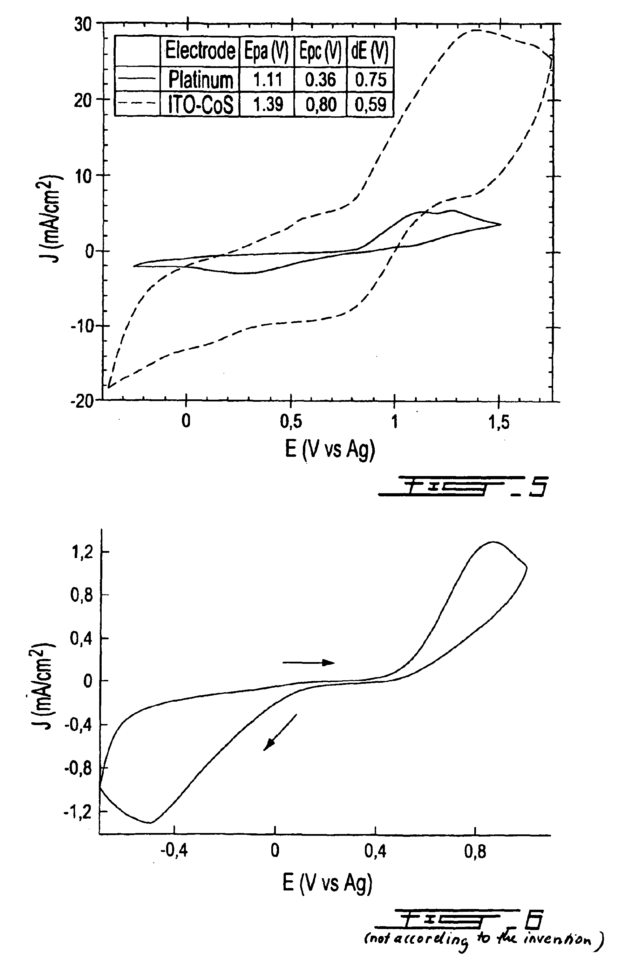

In Fig. 5, there is shown cyclic voltammograms of a solution comprising compound 3 (1,3-diethyl-imidazolidine-2-thione) (0.25 M) and compound 5 (disulfide-form) (0.5 M) in EMITFSI at 22 °C. A platinum electrode (A= 0.0249 cm²) or an ITO-CoS electrode (surface area of 0.1 cm²) was used as working electrode and referenced to an Ag wire. Scan rate was 50 mV/s. The ITO-CoS electrode is described in US 20050089681.

The tests carried out show that 1,3-diethyl-imidazolidine-2-thione and Its disulfide is a good redox couple which has the potential to replace the redox couple used in Grätzel solar cells (DSSCs using I⁻/I₃⁻). The good results obtained in conductivity (electrical properties) and in cyclic voltammetry (electrochemical properties) prove it. Moreover, it was observed that such a composition is substantially colorless or substantially optically clear. It should be noted that the Red:Ox ratio has more influence on the current density (J_{1:1} > J_{1:2} > J_{2:1}) than on ΔEₚ values. The greater current densities were obtained for the 1:1 ratio. It is interesting to point out that the ITO-CoS electrode (see Fig. 5) improves the electrochemical reversibility, shifts the potentials towards a more positive area, enhances both the anodic and cathodic current densities, and increases the reversibility (ΔEₚ is decreased). Therefore, this electrode would act as an excellent catalyst to reduce the oxidized species in a photovoltaic device using an n-type semiconductor as the (photo)anode.

Table 1 gives the conductivity (x10⁻³ S/cm) of three solutions of 1,3-diethyl-imidazolidine-2-thione and its disulfide form in EMITFSI in different ratios (1:1 [0.1 M:0.1 M]; 2:1 [0.2 M:0.1 M]; 1:2 [0.1 M:0.2 M]). Four temperatures were studied (20, 40, 60 and 80 °C). The results show that the conductivity is higher than or equal to 6.0 x 10⁻³ S/cm at 20 °C, which represents an excellent value for a (photo)electrochemical device. As expected, conductivity values are enhanced when the temperature is increased, which could be attributed to the significant decrease of viscosity of EMITFSI at higher temperatures.

**Table 1**

| | **Conductivity (x10⁻³ S/cm)** | | | |
|---|---|---|---|---|
| | **20 °C** | **40 °C** | **60 °C** | **80 °C** |
| **Ratio 1:1** | 6.29 | 11.61 | 18.96 | 27.17 |
| **Ratio 2:1** | 6.76 | 12.58 | 20.33 | 29.15 |
| **Ratio 1:2** | 6.00 | 11.14 | 18.29 | 26.43 |

Some experiments have also been made with the redox couple **7/8,** which is as follows:

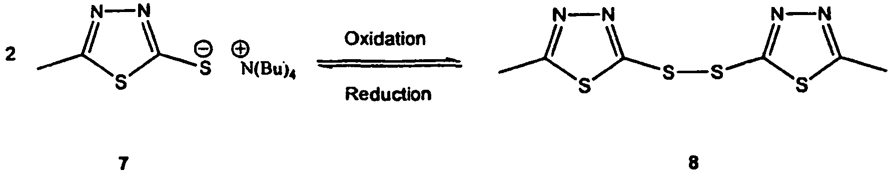

In Fig. 6, there is shown a cyclic voltammogram [I (mA. cm⁻²) vs E (V vs Ag)] of a solution comprising compound **7** (tetrabutylammonium salt of 5-methyl-2-mercapto-1,3,4-thiadiazole) (75 mM) and compound **8** (25 mM) in EMITFSI at 22 °C. A platinum electrode (surface area of 0.025 cm²) was used as working electrode and referenced to an Ag wire. The initial scan direction was oxidizing and the scan rate used was 50 mV. s⁻¹. The results demonstrate that the redox couple is less reversible than the one formed with compounds 3 and 5 (see Fig. 4), and that the anodic and cathodic current densities are lower. Corrosion tests were also carried out on the redox couple **7**/**8,** and it was shown that over a period of 4 months, this redox couple did not corrode silver.

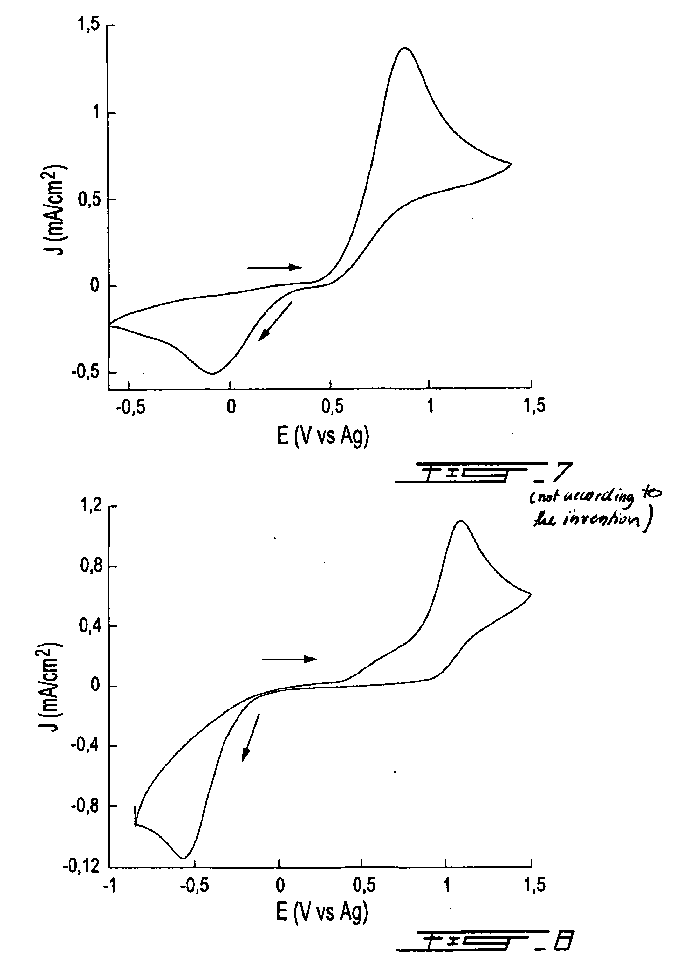

In Fig. 7, there is shown a cyclic voltammogram of a solution comprising compound 9 (0.75 M) and compound **10** (disulfide form) (0.25 M) in EMITFSI at 22 °C. A platinum electrode (A= 0.0249 cm²) was used as working electrode and referenced to an Ag wire. Scan rate was 50 mV/s. The results show that the redox couple **9/10** is more reversible than the redox couple 7 / **8** (see Fig**.** 6).

In Fig. 8, there is shown a cyclic voltammogram of a solution comprising compound **11** (0.66 M) and compound **12** (disulfide form) (0.34 M) in DMF-DMSO : 60-40 containing TBAP (0.2 M), at 22 °C. A platinum electrode (A= 0.0249 cm²) was used as working electrode and referenced to an Ag wire. Scan rate was 50 mV/s. The results show that the redox couple **11 / 12** is much less reversible than the redox couple **9**/**10** (see Fig. 7), probably due to the use of a less conducting electrolytic medium (an ionic liquid is not utilized as the solvent of the redox couple **11**/**12**).

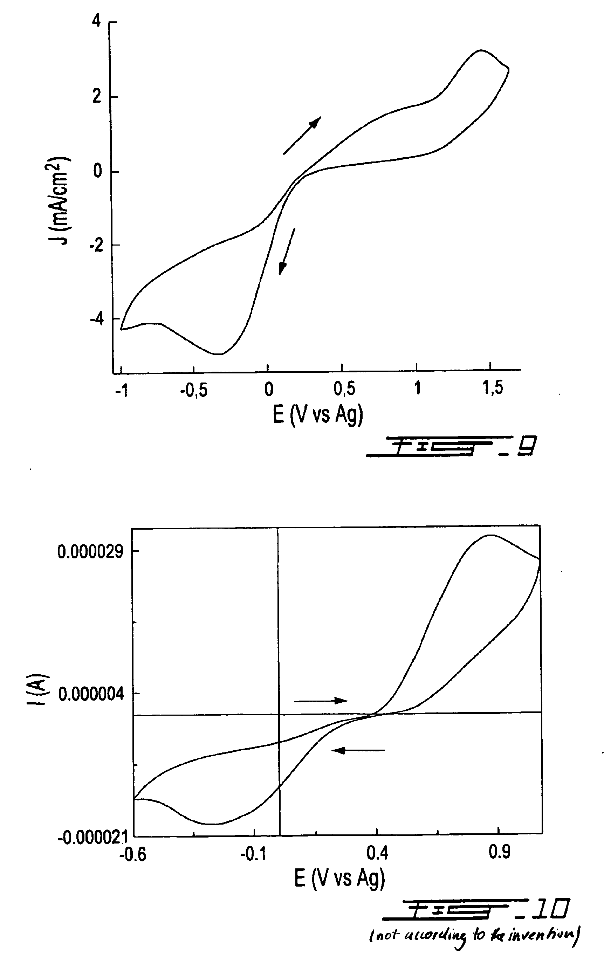

In Fig. 9, there is shown a cyclic voltammogram of a solution comprising compound **13** (0.25 M) and compound **14** (disulfide form) (0.75 M) in DMF-DMSO : 60-40 containing TBAP (0.2 M), at 22 °C. A platinum electrode (A= 0.0249 cm²) was used as working electrode and referenced to an Ag wire. Scan rate was 50 mV/s. It can be noted interestingly that the redox couple **13 / 14** leads to enhanced current densities.

In Fig. 10, there is shown a cyclic voltammogram [I (A) vs E (V vs Ag)] of a solution comprising compound **17** (83.3 mM) and compound **18** (disulfide form) (16.3 mM) in EMITFSI at 22 °C. A platinum electrode (A= 0.0249 cm²) was used as working electrode and referenced to an Ag wire. Scan rate was 50 mV/s. The results demonstrate that the presence of the ionic liquid EMITFSI in the solution favors a better electrochemical reversibility, when compared to the redox couples **11**/**12** (see Fig. 8) and **13 / 14** (see Fig. 9).

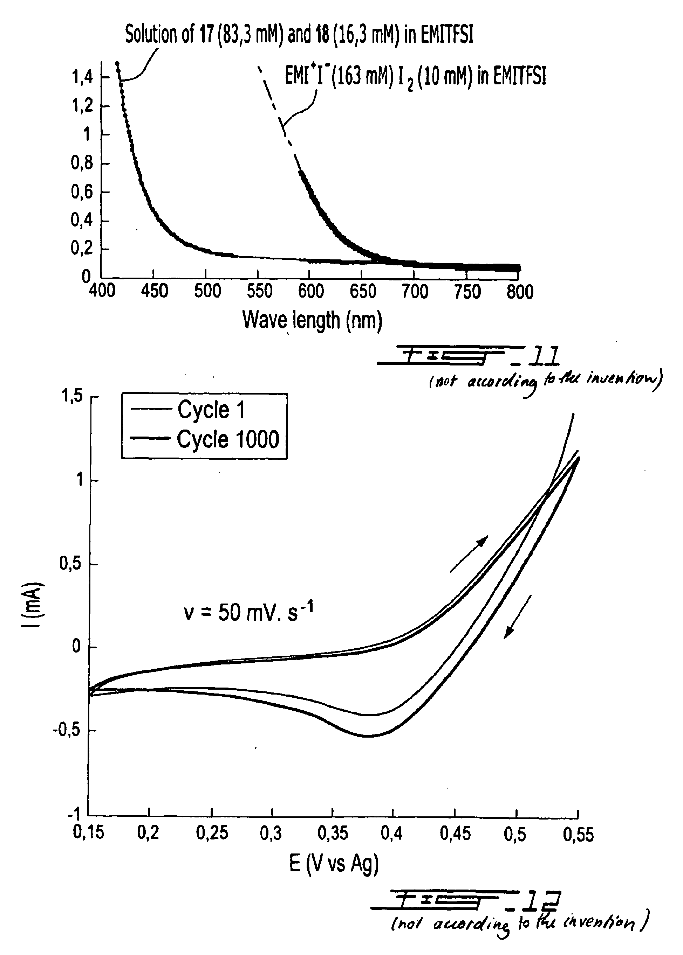

In Fig. 11, there is shown a comparison between the UV-visible spectrum of a solution comprising compounds 17 (83.3 mM) and **18** (16.3 mM) in EMITFSI and a UV-visible spectrum of EMI⁺I⁻ (163 mM) / I₂ (10 mM) in EMITFSI (redox couple used in Grätzel solar cells). As it can be seen from Fig. 11, the solution comprising compounds **17** and **18** in EMITFSI absorbs only partially in the visible area of the spectrum (more significantly at wavelengths lower than 500 nm), which contrasts with the solution of EMI⁺I⁻/ / I₂ in EMITFSI since the latter considerably absorbs in the visible area of the spectrum at wavelengths lower than 650 nm. Fig. 11 thus demonstrates that the composition comprising compounds **17** and **18** is substantially colorless or substantially optically clear.

In Fig. 12, there is shown a stability test that was performed on the solution comprising compounds **17** and **18** in EMITFSI (the solution tested in Figs. 10 and 11) The test was carried out at a temperature of 70 ° C and 1000 cycles were performed as shown on the cyclic voltammogram of Fig. 12. It can thus be said that the redox couple **17** / **18** has a high electrochemical and thermal stability. An ITO-CoS electrode (surface area of 0.25 cm²) was used as working electrode and referenced to an Ag wire.

While the invention has been described in connection with specific embodiments thereof, it will be understood that it is capable of further modifications and this application is intended to cover any variations, uses, or adaptations of the invention following, in general, the principles of the invention and including such departures from the present disclosure as come within known or customary practice within the art to which the invention pertains and as may be applied to the essential features herein before set forth, and as follows in the scope of the appended claims.

## Claims

1. A composition for use as a redox couple, said composition comprising: 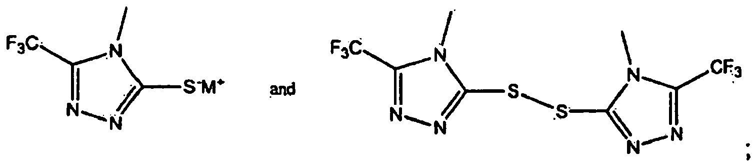 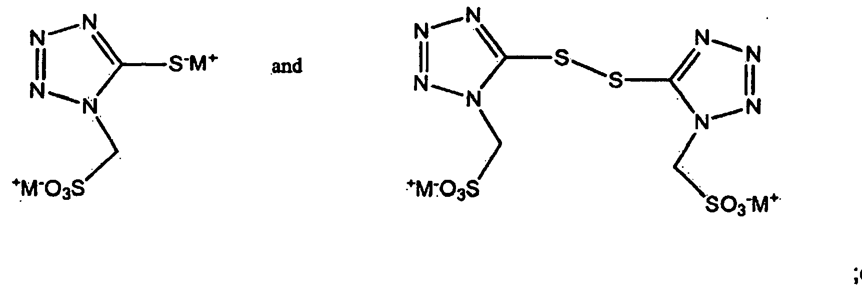 ;or 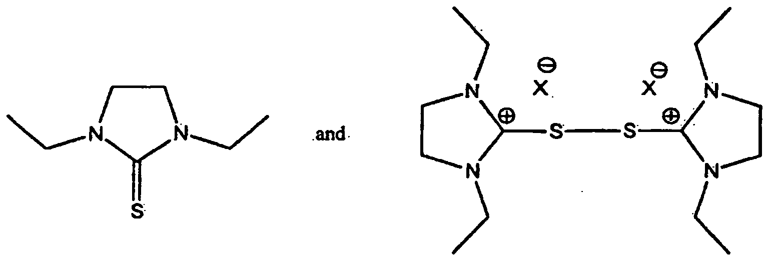 wherein
X⁻ is (FSO₂)₂N⁻, (CF₃SO₂)₂N⁻, (C₂F₅SO₂)₂N⁻, (CF₃SO₂)₃C⁻, CF₃SO₃⁻, CF₃COO⁻, AsF₆⁻, CH₃COO⁻, (CN)₂N⁻, (CN)₃C⁻ NO₃⁻, 2.3HF, Cl⁻, Br⁻, I⁻, PF₆⁻, BF₄⁻, ClO₄, SCN⁻;
wherein M⁺ is an organic cation chosen from N-substituted imidazoliums, said substituent being a C₁-C₁₂ alkyl group which is linear or branched, and tetralkylammoniums, wherein each of said alkyl groups is independently C₁-C₁₂ alkyl which is linear or branched, or an inorganic cation chosen from Li⁺, Na⁺, K⁺, and Cs⁺.

2. A photovoltaic cell comprising an anode, a cathode, and a composition as defined in claim 1.

3. A photovoltaic cell according to claim 2 comprising a solvent, a polymer, a molten salt, an ionic liquid, a gel or any combination thereof.

4. Use of a composition as defined in claim 1, in a solar cell, a fuel cell, a battery, a sensor or a display.

## Patentansprüche

1. Eine Zusammensetzung zur Verwendung als eine Redox-Kopplung, wobei die Zusammensetzung Folgendes umfasst: 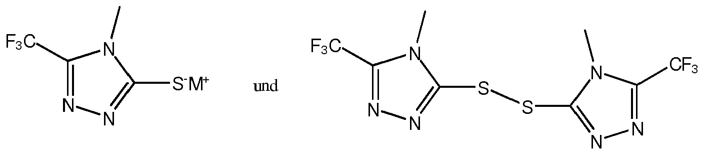 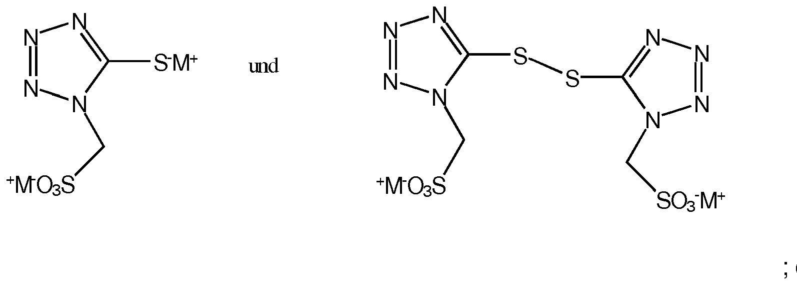 oder 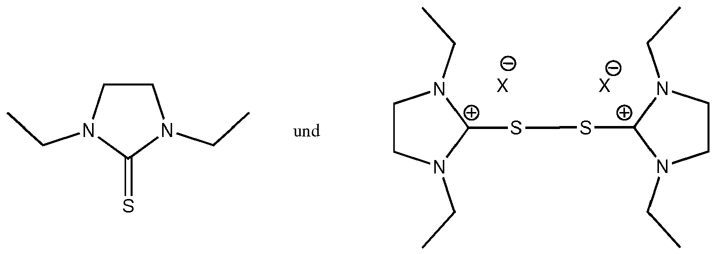 wobei
X⁻ gleich (FSO₂)₂N⁻, (CF₃SO₂)₂N⁻, (C₂F₅SO₂)₂N⁻, (CF₃SO₂)₃C⁻, CF₃SO₃⁻,CF₃COO⁻, AsF₆⁻, CH₃COO⁻, (CN)₂N⁻, (CN)₃C⁻ NO₃⁻, 2.3HF, Cl⁻, Br⁻, I⁻, PF₆⁻, BF₄⁻, ClO₄, SCN⁻ ist;
wobei M⁺ ein organisches Kation ist, das aus N-substituierten Imidazolen, wobei das Substituent eine C₁-C₁₂ Alkylgruppe ist, die linear oder verzweigt ist, und Tetralkylammonien ausgewählt wird, wobei jede der Alkylgruppen unabhängig ein C₁-C₁₂ Alkyl ist, das linear oder verzeigt ist, oder ein anorganisches Kation, das aus Li⁺, Na⁺, K⁺ und Cs⁺ ausgewählt wird.

2. Eine photovoltaische Zelle umfassend eine Anode, eine Kathode und eine Zusammensetzung wie in Anspruch 1 definiert.

3. Eine photovoltaische Zelle gemäß Anspruch 2, umfassend ein Lösungsmittel, ein Polymer, eine Salzschmelze, eine ionische Flüssigkeit, ein Gel oder eine beliebige Kombination daraus.

4. Verwendung einer Zusammensetzung wie in Anspruch 1 definiert in einer Solarzelle, Brennstoffzelle, Batterie oder einer Anzeige.

## Revendications

1. Composition destinée à être utilisée en qualité de couple redox, laquelle composition comprend des composés de formules : 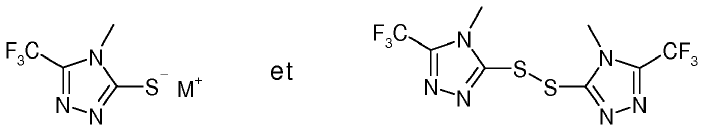 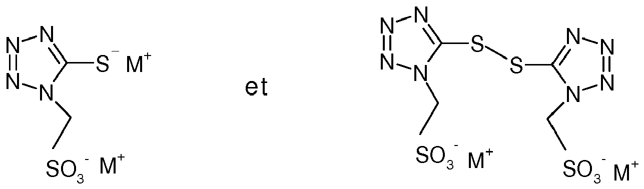 ou 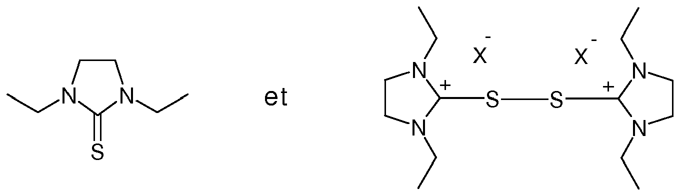 dans lesquelles
- X⁻ représente un anion de formule (FSO₂)₂N⁻, (CF₃SO₂)₂N⁻, (C₂F₅SO₂)₂N⁻, (CF₃SO₂)₃C⁻, CF₃SO₃⁻, CF₃COO⁻, AsF₆⁻, CH₃COO⁻, (CN)₂N⁻, (CN)₃C⁻, NO₃⁻, Cl⁻, Br⁻, I⁻, PF₆⁻, BF₄⁻, ClO₄⁻ ou SCN⁻, ou une entité de formule 2,3HF ;
- et M⁺ représente un cation organique choisi parmi les cations de type imidazolium à substituant porté par un atome d'azote, lequel substituant est un groupe alkyle en C₁-C₁₂, linéaire ou ramifié, et les cations de type tétraalkyl-ammonium dans lesquels chacun desdits groupes alkyle est indépendamment un groupe alkyle en C₁-C₁₂, linéaire ou ramifié, ou un cation inorganique choisi parmi les cations symbolisés par Li⁺, Na⁺, K⁺ et Cs⁺.

2. Cellule photovoltaïque comprenant une anode, une cathode et une composition conforme à la revendication 1.

3. Cellule photovoltaïque conforme à la revendication 2, com-prenant un solvant, un polymère, un sel fondu, un liquide ionique ou un gel, ou n'importe quelle combinaison de tels éléments.

4. Utilisation d'une composition conforme à la revendication 1 dans une pile solaire, une pile à combustible, un accumulateur, un capteur ou un afficheur.
